# FASCICULE DE BREVET EUROPEEN

(11) **EP 2 143 359 B1**
(45) Date de publication et mention de la délivrance du brevet: **25.04.2012**
(21) Numéro de dépôt: 09164781.8
(22) Date de dépôt: 07.07.2009
(51) Int. Cl.: A47J 27/20, A47J 47/12

(54) **Cuve de traitement thermique**
Kessel zur Wärmebehandlung
Heat treatment tank

(30) Priorité: 09.07.2008 FR 0854666
(43) Date de publication de la demande: 13.01.2010
(73) Titulaire: Armor Inox, 56430 Mauron (FR)
(72) Inventeur: Cadoret, Bernard, 56430 Mauron (FR); Marquet, Olivier, 56430 Mauron (FR)
(74) Mandataire: Maillet, Alain

(56) Documents cités:
- EP-A- 0 160 584
- GB-A- 710 866
- US-A- 3 674 504
- US-A- 3 996 847
- US-A- 4 453 457
- US-A- 4 979 435

## Description

La présente invention concerne une cuve de traitement thermique pour produits alimentaires. Elle trouve application dans le domaine du traitement industriel des produits alimentaires, du type barres de viandes cuites. L'invention concerne également un procédé de remplissage d'une telle cuve et un dispositif de couverture pour une telle cuve.

Le document EP-A-160 584 divulgue une cuve de traitement thermique pour produits alimentaires.

Pour préparer des barres de viandes cuites comme par exemple des barres de jambons, celles-ci sont déposées avant cuisson dans des alvéoles de plateaux que l'on empile ou sur des cadres à étagères. Une cuve de traitement thermique de l'état de la technique est constituée d'une enceinte hermétique munie d'un couvercle. Un exemple d'un procédé de préparation des barres de produits alimentaires est le suivant:
- le couvercle de la cuve vide est ouvert,
- une pile de plateaux ou un cadre à étagères rempli de barres de produits alimentaires crus est déposé dans la cuve,
- le couvercle de la cuve est fermé,
- la cuve est remplie d'eau chaude jusqu'à la fin de la cuisson,
- la cuve est vidée,
- la cuve est remplie d'eau froide jusqu'à la fin du refroidissement,
- la cuve est vidée,
- le couvercle est ouvert,
- la pile de plateaux ou le cadre à étagères est enlevé de la cuve et transféré jusqu'à la zone de déchargement des produits alimentaires.

Une telle cuve de traitement thermique peut par sa configuration poser certains problèmes par rapport aux normes sanitaires locales dans la mesure où les produits alimentaires entrent et sortent de la cuve à travers la même ouverture.

Un objet de la présente invention est de proposer une cuve de traitement thermique utilisant de l'eau pour réaliser le traitement thermique qui ne présente pas les inconvénients de l'art antérieur et qui en particulier évite l'entrée et la sortie des produits alimentaires par la même ouverture.

A cet effet, est proposée une cuve de traitement thermique destinée à recevoir au moins deux empilements de produits alimentaires, la cuve de traitement thermique comprenant:
- une enceinte destinée à être remplie avec de l'eau réalisant le traitement thermique et comprenant une ouverture d'admission et une ouverture d'évacuation distinctes et distantes l'une de l'autre, et
- un dispositif de déplacement destiné à prendre en charge un empilement au niveau de l'ouverture d'admission et à le transporter en vis-à-vis de l'ouverture d'évacuation.

Avantageusement, l'ouverture d'admission et l'ouverture d'évacuation sont disposées sur le dessus de l'enceinte.

Avantageusement, le déplacement entre la prise en charge de l'empilement et son positionnement en vis-à-vis de l'ouverture d'évacuation est une translation horizontale.

Avantageusement, la cuve de traitement thermique comprend un dispositif de couverture comprenant:
- un élément central disposé sur la partie de l'enceinte qui est comprise entre les deux ouvertures,
- un couvercle d'admission destiné à venir fermer l'ouverture d'admission,
- un couvercle d'évacuation destiné à venir fermer l'ouverture d'évacuation, et
- un dispositif de blocage qui permet de bloquer, en position fermée, alternativement chacun desdits couvercles.

Avantageusement, le dispositif de blocage comprend:
- une barre de blocage montée libre en translation sur l'élément central parallèlement à la direction horizontale, chaque extrémité de ladite barre de blocage constituant un pêne susceptible de coopérer avec l'un des couvercles pour le bloquer en position fermée, et
- pour chaque couvercle, un dispositif de verrouillage destiné à prendre une position de verrouillage dans laquelle le déplacement de la barre de blocage est empêché, et une position de déverrouillage dans laquelle le déplacement de la barre de blocage est autorisé.

Avantageusement, chaque dispositif de verrouillage comprend un loquet monté libre en rotation, ledit loquet comprenant un levier de blocage qui s'étend d'un côté de l'axe de rotation et un levier d'activation qui s'étend de l'autre côté de l'axe de rotation, et chaque couvercle comprend un plot destiné à venir, en position de déverrouillage, en appui sur le levier d'activation correspondant.

Avantageusement, le dispositif de déplacement comprend:
- un ensemble motorisé destiné à générer un mouvement de va-et-vient, et
- un ensemble de chariots, chacun étant destiné à recevoir successivement un empilement, et étant mis en mouvement par ledit ensemble motorisé et comprenant des moyens d'entraînement qui se verrouillent pour entraîner successivement chaque empilement de l'ouverture d'admission vers l'ouverture d'évacuation et se déverrouillent pour éviter d'entraîner chaque empilement de l'ouverture d'évacuation vers l'ouverture d'admission.

Avantageusement, chaque moyen d'entraînement prend la forme d'un ergot libre de tourner dans un sens de rotation et bloqué en rotation dans le sens opposé.

Avantageusement, chaque chariot est monté coulissant dans des rails de guidage solidaires de l'enceinte.

Avantageusement, chaque empilement repose sur le fond de l'enceinte par l'intermédiaire de roues.

L'invention propose également un procédé de remplissage d'une cuve de traitement thermique avec au moins deux empilements de produits alimentaires, la cuve de traitement thermique comprenant une enceinte remplie avec de l'eau réalisant le traitement thermique et comprenant une ouverture d'admission et une ouverture d'évacuation, et un dispositif de déplacement, le procédé comprenant:
- une étape d'admission d'un premier empilement par l'ouverture d'admission,
- une étape de transport par le dispositif de déplacement de chaque empilement déjà admis en direction de la position en vis-à-vis de l'ouverture d'évacuation,
- une étape d'admission d'un autre empilement par l'ouverture d'admission,
- une étape de bouclage sur l'étape de transport tant que le premier empilement n'a pas atteint la position en vis-à-vis de l'ouverture d'évacuation.

Avantageusement, chaque étape d'admission consiste en une dépose de l'empilement à l'aplomb d'un chariot du dispositif de déplacement.

Avantageusement, l'étape de transport consiste en un premier déplacement du chariot en direction de la position en vis-à-vis de l'ouverture d'évacuation, puis en un deuxième déplacement en sens inverse.

L'invention propose également un dispositif de couverture pour une cuve de traitement thermique destinée à recevoir au moins deux empilements de produits alimentaires, la cuve de traitement thermique comprenant:
- une enceinte destinée à être remplie avec de l'eau réalisant le traitement thermique et comprenant une ouverture d'admission et une ouverture d'évacuation distinctes et distantes l'une de l'autre, et disposées sur le dessus de l'enceinte, et
- un dispositif de déplacement destiné à prendre en charge un empilement au niveau de l'ouverture d'admission et à le transporter suivant une translation horizontale en vis-à-vis de l'ouverture d'évacuation,
   le dispositif de couverture comprenant:
- un élément central disposé sur la partie de l'enceinte qui est comprise entre les deux ouvertures,
- un couvercle d'admission destiné à venir fermer l'ouverture d'admission,
- un couvercle d'évacuation destiné à venir fermer l'ouverture d'évacuation, et
- un dispositif de blocage qui permet de bloquer, en position fermée, alternativement chacun desdits couvercles.

Avantageusement, le dispositif de blocage comprend:
- une barre de blocage montée libre en translation sur l'élément central parallèlement à la direction horizontale, chaque extrémité de ladite barre de blocage constituant un pêne susceptible de coopérer avec l'un des couvercles pour le bloquer en position fermée, et
- pour chaque couvercle, un dispositif de verrouillage destiné à prendre une position de verrouillage dans laquelle le déplacement de la barre de blocage est empêché, et une position de déverrouillage dans laquelle le déplacement de la barre de blocage est autorisé.

Avantageusement, chaque dispositif de verrouillage comprend un loquet monté libre en rotation, ledit loquet comprenant un levier de blocage qui s'étend d'un côté de l'axe de rotation et un levier d'activation qui s'étend de l'autre côté de l'axe de rotation, et chaque couvercle comprend un plot destiné à venir, en position de déverrouillage, en appui sur le levier d'activation correspondant.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en perspective d'une cuve de traitement thermique selon l'invention,
la Fig. 2 représente une vue en perspective d'un dispositif de déplacement pour une cuve selon l'invention,
la Fig. 3 montre un détail d'une cuve de traitement selon l'invention,
la Fig. 4 montre un détail du dispositif de déplacement,
la Fig. 5 montre un dispositif de couverture selon l'invention,
la Fig. 6 montre un détail lorsqu'un couvercle est en position, et
la Fig. 7 montre un détail lorsqu'un couvercle est retiré.

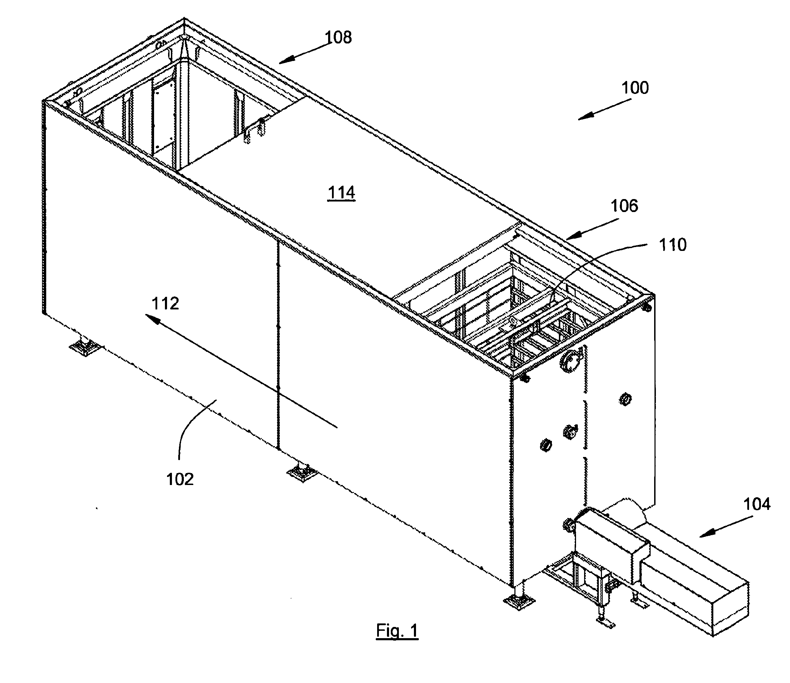

Dans la description qui suit, les termes relatifs à une position sont pris en référence à une cuve de traitement thermique en position de fonctionnement, c'est-à-dire comme elle est représentée sur la Fig. 1.

La Fig. 1 montre une cuve de traitement thermique 100 qui comprend une enceinte 102 et un dispositif de déplacement 104.

L'enceinte 102 qui prend ici la forme d'un parallélépipède rectangle comprend une ouverture d'admission 106 et une ouverture d'évacuation 108. Les deux ouvertures 106 et 108 sont distinctes et distantes l'une de l'autre. Chaque ouverture 106, 108 est disposée sur la face supérieure de l'enceinte 102. Le centre de l'ouverture d'admission 106 et le centre de l'ouverture d'évacuation 108 définissent une direction générale de déplacement représentée par la flèche 112 et qui est horizontale.

Dans un mode de réalisation préféré de l'invention, chaque ouverture 106, 108 est obturée par un couvercle qui n'a pas été représenté pour faciliter la compréhension de la Fig. 1. Seul un élément central de couverture 114, qui vient recouvrir l'enceinte 102 en laissant libre les ouvertures 106 et 108, est représenté. L'élément central de couverture 114 recouvre la partie de l'enceinte 102 qui est comprise entre les deux ouvertures 106 et 108.

Dans l'enceinte 102 est disposé un empilement 110. L'empilement 110 peut être constitué de tout dispositif permettant de contenir des produits alimentaires, comme par exemple des alvéoles, des paniers, des cadres à étagères, des unités empilables...

L'enceinte 102 comprend ici quatre emplacements pour quatre empilements 110 différents. D'une manière générale, le nombre d'emplacements est supérieur à deux.

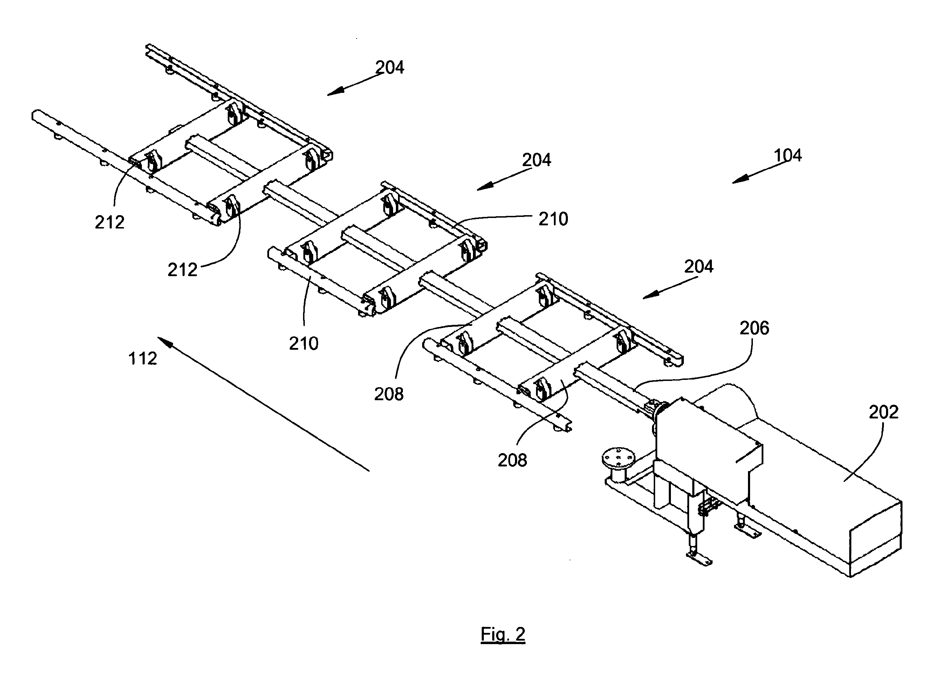

La Fig. 2 montre un mode de réalisation particulier du dispositif de déplacement 104. La fonction du dispositif de déplacement 104 est de prendre en charge un empilement 110 au niveau de l'ouverture d'admission 106 et de le transporter en vis-à-vis de l'ouverture d'évacuation 108, dans le but d'éviter qu'un empilement 110 devant être évacué après cuisson utilise l'ouverture d'admission 106.

Pour assurer que chaque empilement 110 entrant dans l'enceinte par l'ouverture d'admission 106, sorte obligatoirement par l'ouverture d'évacuation 108, le dispositif de déplacement 104 ne peut transporter les empilements 110 que dans une seule direction. Le transport des empilements 110 de l'ouverture d'évacuation 108 vers l'ouverture d'admission 106 doit être impossible en fonctionnement normal. A cette fin, comme cela est explicité ci-après, le dispositif de déplacement 104 comprend des moyens d'entraînement 212 qui se verrouillent pour entraîner successivement chaque empilement 110 de l'ouverture d'admission 106 vers l'ouverture d'évacuation 108 et se déverrouillent pour éviter d'entraîner chaque empilement 110 de l'ouverture d'évacuation 108 vers l'ouverture d'admission 106.

Bien sûr, il est possible de prévoir que pour des raisons de sécurité, le transport des empilements 110 de l'ouverture d'évacuation 108 vers l'ouverture d'admission 106 peut être réalisé.

Le dispositif de déplacement 104 comprend:
- un ensemble motorisé 202 qui est disposé à l'extérieur de l'enceinte 102, et
- trois chariots 204, chacun étant destiné à recevoir successivement un empilement 110, et étant mis en mouvement par ledit ensemble motorisé 202.

Il y a en fait un chariot 204 de moins que le nombre d'emplacements dans l'enceinte 102.

Les trois chariots 204 sont disposés en ligne parallèlement à la direction générale de déplacement 112 et sont solidaires d'une poutre 206 qui est disposée horizontalement et dont l'extrémité est entraînée en déplacement par l'ensemble motorisé 202. Le déplacement entre la prise en charge de l'empilement 110 et son positionnement en vis-à-vis de l'ouverture d'évacuation 108 est une translation horizontale parallèle à la direction générale de déplacement 112.

Chaque chariot 204 est ici constitué de deux poutrelles 208 qui sont horizontales et perpendiculaires à la poutre 206. Les extrémités de chaque poutrelle 208 sont montées coulissantes dans des rails de guidage 210 qui sont solidaires de l'enceinte 102.

Par activation de l'ensemble motorisé 202, les chariots 204 sont entraînés en translation selon un mouvement de va-et-vient parallèlement à la direction générale de déplacement 112.

La poutre 206 traverse l'enceinte 102 par un orifice réalisé dans l'une de ces parois, et pour assurer l'étanchéité au niveau de cet orifice, un joint gonflable est mis en place.

Dans le mode de réalisation de l'invention représenté ici, chaque poutrelle 208 comprend deux ergots d'entraînement 212 qui sont escamotables et dont le fonctionnement est explicité ci-après. Chaque ergot 212 constitue l'un des moyens d'entraînement.

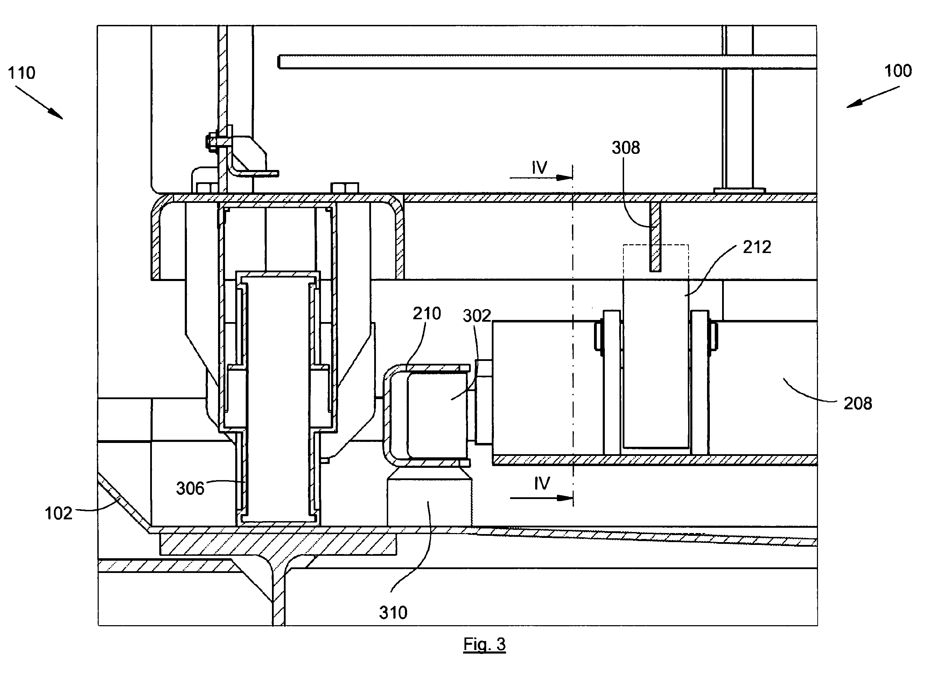

La Fig. 3 est un détail de la cuve de traitement thermique 100.

Sur le fond de l'enceinte 102 sont disposés des plots de maintien 310 sur lesquels sont fixés les rails de guidage 210. Les extrémités des poutrelles 208 sont munis de roues 302 qui viennent rouler dans les rails de guidage 210.

Chaque empilement 110 repose sur le fond de l'enceinte 102 par l'intermédiaire d'un ensemble de roues 306. Les roues 306 sont disposés de chaque côté de l'enceinte 102 de manière à assurer l'équilibrage de l'empilement 110.

Sous chaque empilement 110 est prévu en vis-à-vis de chaque ergot d'entraînement 212, un doigt 308 qui est destiné à coopérer avec ledit ergot d'entraînement 212.

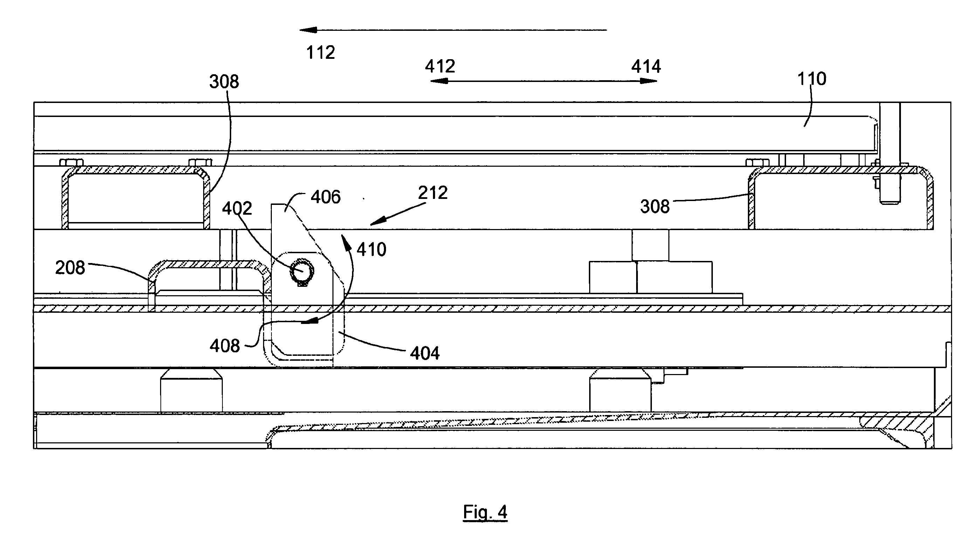

La Fig. 4 montre un détail du mode de coopération entre un doigt 308 et un ergot d'entraînement 212.

Le mode de fonctionnement qui va maintenant être décrit s'applique de la même manière à tous les ergots d'entraînement 212. L'ergot d'entraînement 212 est monté libre en rotation sur la poutrelle 208 autour d'un axe parallèle 402 à la poutrelle 208, c'est-à-dire horizontal et perpendiculaire à la direction générale de déplacement 112. L'ergot 212 comprend un sabot 404 qui sert de contrepoids et qui s'étend sous l'axe 402 et un nez 406 qui s'étend au-dessus de l'axe 402. Le sabot 404 contraint le nez 406 dans cette position.

Lorsque l'ergot d'entraînement 212 est dans la position représentée dans la Fig. 4, il est bloqué en rotation parce que son sabot vient en contact avec une paroi de la poutrelle 208. L'ergot d'entraînement 212 ne peut donc pas tourner dans le sens horaire représenté par la flèche 408. Par contre, l'ergot d'entraînement 212 reste libre de tourner dans le sens antihoraire représenté par la flèche 410.

Ainsi, lorsque la poutre 206 se déplace dans le sens de la flèche 412, elle entraîne chaque chariot 204 et chaque ergot d'entraînement 212 dans le même sens. Lorsque les ergots d'entraînement 212 arrivent en butée contre les doigts 308, l'empilement 110 correspondant est lui aussi entraîné dans le même sens 412.

Lorsque la poutre 206 se déplace dans le sens de la flèche 414, elle entraîne chaque chariot 204 et chaque ergot d'entraînement 212 dans le même sens. Lorsque les ergots d'entraînement 212 arrivent en butée contre les doigts 308, ils basculent dans le sens de la flèche 410 et passent sous l'empilement 110 correspondant sans l'entraîner, ce dernier reste alors immobile.

Ainsi par un mouvement de va-et-vient de la poutre 206, chaque empilement 110 progresse dans le sens de la flèche 412, c'est-à-dire de l'ouverture d'admission 106 vers l'ouverture d'évacuation 108, et il lui est impossible de parcourir le chemin inverse.

L'ensemble motorisé 202 peut être par exemple un système à crémaillère, qui comprend un moteur entraînant un engrenage qui engrène sur un secteur fixé à la poutre 206.

Le procédé de remplissage de la cuve de traitement thermique 100 est le suivant.

Un premier empilement 110 est descendu par l'ouverture d'admission 106 sur le premier chariot 204 situé sous cette ouverture d'admission 106.

L'ensemble motorisé 202 est activé dans le premier sens 412 de manière à ce que les ergots d'entraînement 212 du premier chariot 204, viennent en appui contre les doigts 308 du premier empilement 110 et le poussent vers l'ouverture d'évacuation 108.

Lorsque le premier empilement 110 a atteint une première position intermédiaire, l'ensemble motorisé 202 est activé dans le deuxième sens 414 de manière à ce que les ergots d'entraînement 212 du premier chariot 204 passent sous les doigts 308 du premier empilement 110 et se replacent sous l'ouverture d'admission 106. Le deuxième chariot 204 se retrouve alors sous le premier empilement 110.

Un deuxième empilement 110 peut alors être descendu par l'ouverture d'admission 106 sur le premier chariot 204 situé sous cette ouverture d'admission 106.

L'ensemble motorisé 202 est activé dans le premier sens 412 et le premier chariot 204 entraîne le deuxième empilement 110 vers la première position intermédiaire, tandis que le deuxième chariot 204 entraîne le premier empilement 110 vers une deuxième position intermédiaire.

Le cycle se poursuit jusqu'à remplir l'enceinte 102 avec le nombre d'empilements 110 adéquat, c'est-à-dire jusqu'à ce que le premier empilement 110 se trouve sous l'ouverture d'évacuation 108 et que à chaque position intermédiaire soit disposé un empilement 110.

Le procédé de remplissage de la cuve de traitement thermique 100 comprend ainsi:
- une étape d'admission d'un premier empilement 110 par l'ouverture d'admission 106,
- une étape de transport par le dispositif de déplacement 104 de chaque empilement 110 déjà admis en direction de la position en vis-à-vis de l'ouverture d'évacuation 108,
- une étape d'admission d'un autre empilement 110 par l'ouverture d'admission 106,
- une étape de bouclage sur l'étape de transport tant que le premier empilement 110 n'a pas atteint la position en vis-à-vis de l'ouverture d'évacuation 108.

Chaque étape d'admission consiste en une dépose de l'empilement 110 à l'aplomb du premier chariot 204 du dispositif de déplacement 104.

L'étape de transport consiste en un premier déplacement de chaque chariot 204 en direction de la position en vis-à-vis de l'ouverture d'évacuation 108, puis en un deuxième déplacement en sens inverse.

L'enlèvement des empilements se poursuit de la même manière. Le premier empilement 110 est évacué par l'ouverture d'évacuation 108.

L'ensemble motorisé 202 est activé dans le premier sens 412 de manière à ce que les ergots d'entraînement 212 du dernier chariot 204, viennent en appui contre les doigts 308 du deuxième empilement introduit 110 et le poussent sous l'ouverture d'évacuation 108. En même temps, les autres empilements 110 sont entraînés par les autres chariots 204.

Le mouvement de va-et-vient de l'ensemble motorisé 202 se poursuit jusqu'à ce que chaque empilement 110 se retrouve sous l'ouverture d'évacuation 108 et soit évacué.

Un procédé de traitement thermique mis en oeuvre dans une cuve de traitement thermique 100 selon l'invention comprend:
- une étape de dépose successive des empilements 110 remplis de produits alimentaires crus dans l'enceinte 102 par l'ouverture d'admission 106,
- une étape de fermeture des ouvertures d'admission 106 et d'évacuation 108,
- une étape de remplissage de l'enceinte 102 avec de l'eau de cuisson,
- une étape de cuisson des produits alimentaires,
- une étape de vidange de l'eau de cuisson de l'enceinte 102,
- une étape de remplissage de l'enceinte 102 avec de l'eau de refroidissement,
- une étape de refroidissement des produits alimentaires,
- une étape de vidange de l'eau de refroidissement de l'enceinte 102,
- une étape de retrait successif des empilements 110 remplis de produits alimentaires cuits de l'enceinte 102 par l'ouverture d'évacuation 108.

Le principe consiste donc dans le fait que le premier empilement 110 admis est le premier empilement 110 évacué. Il permet en outre de séparer physiquement la zone où les produits crus entrent dans la cuve de celle où les produits cuits et refroidis sortent de celle-ci.

Le déplacement de chaque empilement 110 dans l'enceinte 102 s'effectue horizontalement ce qui n'entraîne aucune contrainte mécanique importante dans la structure de l'enceinte 102.

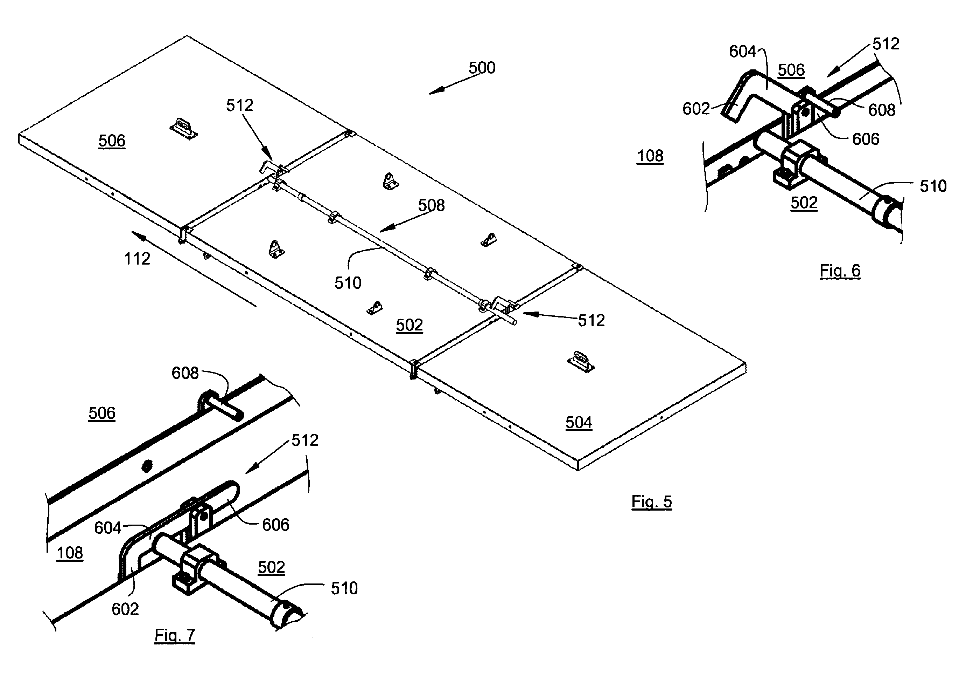

La Fig. 5 montre un dispositif de couverture 500 comprenant:
- un élément central 502 qui vient en lieu et place de l'élément central de couverture 114 de la Fig. 1, c'est-à-dire qu'il est disposé sur la partie de l'enceinte 102 qui est comprise entre les deux ouvertures 106 et 108,
- un couvercle d'admission 504 destiné à venir fermer l'ouverture d'admission 106,
- un couvercle d'évacuation 506 destiné à venir fermer l'ouverture d'évacuation 108, et
- un dispositif de blocage 508 qui permet de bloquer, en position fermée, alternativement chacun desdits couvercles 504 et 506, c'est-à-dire qu'il n'est possible d'ouvrir qu'un seul couvercle 504, 506 à la fois.

Le dispositif de blocage 508 comprend dans le mode de réalisation représenté ici:
- une barre de blocage 510 montée libre en translation sur l'élément central 502 parallèlement à la direction générale de déplacement 112, chaque extrémité de ladite barre de blocage 510 étant prévue pour constituer un pêne qui coopère avec l'un des couvercles 504, 506 de manière à le bloquer en position fermée,
- pour chaque couvercle 504, 506, un dispositif de verrouillage 512 adapté pour prendre alternativement une position de verrouillage dans laquelle le déplacement de la barre de blocage 510 est empêché, et une position de déverrouillage dans laquelle le déplacement de la barre de blocage 510 est autorisé.

La longueur de la barre de blocage 510 est telle que lorsque l'une des extrémités de la barre de blocage 510 bloque en position fermée l'un des couvercles 504, 506, l'autre extrémité de la barre de blocage 510 est dégagée de l'autre couvercle 506, 504 de manière à autoriser son ouverture.

Lorsqu'un couvercle 504, 506 est en place sur l'ouverture correspondante 106, 108, le dispositif de verrouillage 512 correspondant est en position de déverrouillage, tandis que lorsqu'un couvercle 504, 506 n'est pas en place, le dispositif de verrouillage 512 correspondant est en position de verrouillage.

Le passage de la position de verrouillage à la position de déverrouillage s'effectue par mise en appui d'un plot 608 que chaque couvercle 504, 506 comprend et qui est destiné à venir appuyer sur le dispositif de verrouillage 512 correspondant.

Dans le mode de réalisation de l'invention présenté ici, le blocage d'un couvercle 504, 506 s'effectue par positionnement d'une extrémité de la barre de blocage 510 au-dessus dudit couvercle 504, 506.

Le dispositif de verrouillage 512 va être plus particulièrement décrit pour le couvercle d'évacuation 506, mais le dispositif de verrouillage 512 du couvercle d'admission 504 est similaire.

La Fig. 6 montre le dispositif de verrouillage 512 dans la position de déverrouillage et la Fig. 7 montre le dispositif de verrouillage 512 dans la position de verrouillage.

Le dispositif de verrouillage 512 comprend un loquet 602 qui est monté libre en rotation, ici autour d'un axe parallèle à direction générale de déplacement 112. Chaque dispositif de verrouillage 512 est disposé entre l'élément central 502 et l'un des couvercles 504, 506 et il est ici solidaire de l'élément central 502.

Le loquet 602 comprend un levier de blocage 604 qui s'étend d'un côté de l'axe de rotation et un levier d'activation 606 qui s'étend de l'autre côté de l'axe de rotation.

En position de verrouillage (Fig. 7), le levier de blocage 604 est en vis-à-vis de l'extrémité de la barre de blocage 510 empêchant le déplacement de cette dernière dans la direction de l'ouverture d'évacuation 108 et du couvercle d'évacuation 506.

En position de déverrouillage (Fig. 6), le levier de blocage 604 n'est pas en vis-à-vis de l'extrémité de la barre de blocage 510 permettant le déplacement de cette dernière dans la direction de l'ouverture d'évacuation 108 et du couvercle d'évacuation 506.

Le passage de la position de verrouillage à la position de déverrouillage s'effectue par appui du plot 608 sur le levier d'activation 606.

Le fonctionnement du dispositif de couverture 500 est le suivant.

Lorsque les deux couvercles 504 et 506 sont en place, chaque dispositif de verrouillage 512 est en position de déverrouillage, c'est-à-dire que chaque plot 608 appuie sur le levier d'activation 606, permettant ainsi le libre déplacement de la barre de blocage 510 au-dessus de l'un ou l'autre des couvercles 504, 506.

Lorsque la barre de blocage 510 est déplacée au-dessus d'un couvercle, par exemple le couvercle 504, l'autre couvercle, en l'espèce le couvercle 506, peut être librement retiré.

Le retrait du couvercle 506 provoque la rupture de l'appui du plot 608 sur le levier d'activation 606 et par conséquent l'abaissement du levier de blocage 604 en vis-à-vis de l'extrémité de la barre de blocage 510, empêchant tout déplacement ultérieur de cette dernière et donc le retrait de l'autre couvercle 504.

La remise en place du couvercle 506 ainsi retiré provoque la mise en appui du plot 608 sur le levier d'activation 606 et par conséquent le soulèvement du levier de blocage 604, permettant le libre déplacement de la barre de blocage 510.

Bien entendu, la présente invention n'est pas limitée aux exemples et modes de réalisation décrits et représentés, mais elle est susceptible de nombreuses variantes accessibles à l'homme de l'art.

## Revendications

1. Cuve de traitement thermique (100) destinée à recevoir au moins deux empilements de produits alimentaires, la cuve de traitement thermique (100) comprenant:
- une enceinte (102) destinée à être remplie avec de l'eau réalisant le traitement thermique et comprenant une ouverture d'admission (106) disposée sur le dessus de l'enceinte (102) et une ouverture d'évacuation (108) distincte, disposée sur le dessus de l'enceinte (102) et distantes l'une de l'autre,
- un dispositif de déplacement (104) destiné à prendre en charge un empilement (110) au niveau de l'ouverture d'admission (106) et à le transporter en vis-à-vis de l'ouverture d'évacuation (108), et
- un dispositif de couverture (500) comprenant un élément central (502) disposé sur la partie de l'enceinte (102) qui est comprise entre les deux ouvertures (106, 108), la cuve de traitement thermique étant **caractérisée en ce que** le dispositif de couverture (500) comprend également:
- un couvercle d'admission (504) destiné à venir fermer l'ouverture d'admission (106),
- un couvercle d'évacuation (506) destiné à venir fermer l'ouverture d'évacuation (108), et
- un dispositif de blocage (508) qui permet de bloquer, en position fermée, alternativement chacun desdits couvercles (504, 506).

2. Cuve de traitement thermique (100) selon la revendication 1, **caractérisée en ce que** le déplacement entre la prise en charge de l'empilement (110) et son positionnement en vis-à-vis de l'ouverture d'évacuation (108) est une translation horizontale (112).

3. Cuve de traitement thermique (100) selon l'une des revendications 1 ou 2, **caractérisée en ce que** le dispositif de blocage (508) comprend:
- une barre de blocage (510) montée libre en translation sur l'élément central (502) parallèlement à la direction horizontale (112), chaque extrémité de ladite barre de blocage (510) constituant un pêne susceptible de coopérer avec l'un des couvercles (504, 506) pour le bloquer en position fermée, et
- pour chaque couvercle (504, 506), un dispositif de verrouillage (512) destiné à prendre une position de verrouillage dans laquelle le déplacement de la barre de blocage (510) est empêché, et une position de déverrouillage dans laquelle le déplacement de la barre de blocage (510) est autorisé.

4. Cuve de traitement thermique (100) selon la revendication 3, **caractérisée en ce que** chaque dispositif de verrouillage (512) comprend un loquet (602) monté libre en rotation, ledit loquet (602) comprenant un levier de blocage (604) qui s'étend d'un côté de l'axe de rotation et un levier d'activation (606) qui s'étend de l'autre côté de l'axe de rotation, et **en ce que** chaque couvercle (504, 506) comprend un plot (608) destiné à venir, en position de déverrouillage, en appui sur le levier d'activation (606) correspondant.

5. Cuve de traitement thermique (100) selon l'une des revendications 1 à 4, **caractérisée en ce que** le dispositif de déplacement (104) comprend:
- un ensemble motorisé (202) destiné à générer un mouvement de va-et-vient, et
- un ensemble de chariots (204), chacun étant destiné à recevoir successivement un empilement (110), et étant mis en mouvement par ledit ensemble motorisé (202) et comprenant des moyens d'entraînement (212) qui se verrouillent pour entraîner successivement chaque empilement (110) de l'ouverture d'admission (106) vers l'ouverture d'évacuation (108) et se déverrouillent pour éviter d'entraîner chaque empilement (110) de l'ouverture d'évacuation (108) vers l'ouverture d'admission (106).

6. Cuve de traitement thermique (100) selon la revendication 5, **caractérisée en ce que** chaque moyen d'entraînement (212) prend la forme d'un ergot (212) libre de tourner dans un sens de rotation et bloqué en rotation dans le sens opposé.

7. Cuve de traitement thermique (100) selon l'une des revendications 5 ou 6, **caractérisée en ce que** chaque chariot (204) est monté coulissant dans des rails de guidage (210) solidaires de l'enceinte (102).

8. Cuve de traitement thermique (100) selon l'une des revendications 1 à 7, **caractérisée en ce que** chaque empilement (110) repose sur le fond de l'enceinte (102) par l'intermédiaire de roues (306).

9. Dispositif de couverture (500) pour une cuve de traitement thermique (100) destinée à recevoir au moins deux empilements de produits alimentaires, la cuve de traitement thermique (100) comprenant:
- une enceinte (102) destinée à être remplie avec de l'eau réalisant le traitement thermique et comprenant une ouverture d'admission (106) et une ouverture d'évacuation (108) distinctes et distantes l'une de l'autre, et disposées sur le dessus de l'enceinte (102), et
- un dispositif de déplacement (104) destiné à prendre en charge un empilement (110) au niveau de l'ouverture d'admission (106) et à le transporter en vis-à-vis de l'ouverture d'évacuation (108),
le dispositif de couverture (500) comprenant un élément central (502) disposé sur la partie de l'enceinte (102) qui est comprise entre les deux ouvertures (106, 108), et étant **caractérisé en ce qu'**il comporte en outre:
- un couvercle d'admission (504) destiné à venir fermer l'ouverture d'admission (106),
- un couvercle d'évacuation (506) destiné à venir fermer l'ouverture d'évacuation (108), et
- un dispositif de blocage (508) qui permet de bloquer, en position fermée, alternativement chacun desdits couvercles (504, 506).

10. Dispositif de couverture (500) selon la revendication 9, **caractérisé en ce que** le dispositif de blocage (508) comprend:
- une barre de blocage (510) montée libre en translation sur l'élément central (502) parallèlement à la direction horizontale (112), chaque extrémité de ladite barre de blocage (510) constituant un pêne susceptible de coopérer avec l'un des couvercles (504, 506) pour le bloquer en position fermée, et
- pour chaque couvercle (504, 506), un dispositif de verrouillage (512) destiné à prendre une position de verrouillage dans laquelle le déplacement de la barre de blocage (510) est empêché, et une position de déverrouillage dans laquelle le déplacement de la barre de blocage (510) est autorisé.

11. Dispositif de couverture (500) selon la revendication 11, **caractérisé en ce que** chaque dispositif de verrouillage (512) comprend un loquet (602) monté libre en rotation, ledit loquet (602) comprenant un levier de blocage (604) qui s'étend d'un côté de l'axe de rotation et un levier d'activation (606) qui s'étend de l'autre côté de l'axe de rotation, et **en ce que** chaque couvercle (504, 506) comprend un plot (608) destiné à venir, en position de déverrouillage, en appui sur le levier d'activation (606) correspondant.

## Claims

1. Heat treatment tank (100) intended to receive at least two stacks of food products, the heat treatment tank (100) comprising:
- an enclosure (102) which is intended to be filled with water performing the heat treatment and which comprises an inlet opening (106) arranged on the top of the enclosure (102) and a separate outfeed opening (108) which is arranged on the top of the enclosure (102), which openings (106, 108) are remote from one another,
- a displacing arrangement (104) which is intended to take charge of a stack (110) at the inlet opening (106) and transport it to a point opposite the outfeed opening (108), and
- a covering arrangement (500) comprising a central member (502) which is arranged on the part of the enclosure (102) which is situated between the two openings (106, 108),
the heat treatment tank being **characterised in that** the covering arrangement (500) also comprises:
- an inlet cover (504) which is intended to close the inlet opening (106),
- an outfeed cover (506) which is intended to cover the outfeed opening (108),
and
- a locking arrangement (508) which enables each of the said covers (504, 506) to be locked in the closed position, alternately.

2. Heat treatment tank (100) according to claim 1, **characterised in that** the displacement which occurs between the stack (110) being taken charge of and its positioning opposite the outfeed opening (108) is a horizontal movement in translation.

3. Heat treatment tank (100) according to either of claims 1 and 2, **characterised in that** the locking arrangement (508) comprises:
- a locking rod (510) which is mounted to be free in translation on the central member (502) in parallel to the horizontal direction (112), each end of the said locking rod (510) forming a sliding bolt which is able to co-operate with one of the covers (504, 506) to lock it in the closed position, and
- for each cover (504, 506), a blocking arrangement (512) intended to assume a blocking position in which the displacement of the locking rod (510) is prevented, and an unblocking position in which the displacement of the locking rod (510) is permitted.

4. Heat treatment tank (100) according to claim 3, **characterised in that** each blocking arrangement (512) comprises a gate member (602) which is mounted to be free to rotate, the said gate member (602) comprising a blocking arm (604) which extends on one side of the axis of rotation and an actuating arm (606) which extends on the other side of the axis of rotation, and **in that** each cover (504, 506) comprises a pin (608) which is intended to come to bear on the corresponding actuating arm (606) in the unblocking position.

5. Heat treatment tank (100) according to one of claims 1 to 4, **characterised in that** the displacing arrangement (104) comprises:
- a motorised assembly (202) intended to generate a reciprocating movement, and,
- a set of carriages (204), each being intended to receive a stack (110) in succession, and being set in motion by the said motorised assembly (202) and comprising drive means (212) which lock to drive, in succession, each stack (110) from the inlet opening (106) to the outfeed opening (108) and which unlock to avoid driving each stack (110) from the outfeed opening (108) towards the inlet opening (106).

6. Heat treatment tank (100) according to claim 5, **characterised in that** each drive means (212) takes the form of a dog (212) which is free to turn in one direction of rotation and which is blocked against rotation in the opposite direction.

7. Heat treatment tank (100) according to either of claims 5 and 6, **characterised in that** each carriage (204) is mounted to slide in guide rails (210) secured to the enclosure (102).

8. Heat treatment tank (100) according to one of claims 1 to 7, **characterised in that** each stack (110) rests on the bottom of the enclosure (102) via wheels (306).

9. Covering arrangement (500) for a heat treatment tank (100) which is intended to receive at least two stacks of food products, the heat treatment tank (100) comprising:
- an enclosure (102) intended to be filled with water performing the heat treatment, and comprising an inlet opening (106) and an outfeed opening (108) which are separate and remote from one another and which are arranged on the top of the enclosure (102), and
- a displacing arrangement (104) intended to take charge of a stack (110) at the inlet opening (106) and to transport to a point opposite the outfeed opening (108),
- the covering arrangement (500) comprising a central member (502) which is arranged on the part of the enclosure (102) which is situated between the two openings (106, 108) and being **characterised in that** it also comprises:
- an inlet cover (504) which is intended to close the inlet opening (106),
- an outfeed cover (506) which is intended to cover the outfeed opening (108),
and
- a locking arrangement (508) which enables each of the said covers (504, 506) to be locked in the closed position, alternately.

10. Covering arrangement (500) according to claim 9, **characterised in that** the locking arrangement (508) comprises:
- a locking rod (510) which is mounted to be free in translation on the central member (502) in parallel to the horizontal direction (112), each end of the said locking rod (510) forming a sliding bolt able to co-operate with one of the covers (504, 506) to lock it in the closed position, and
- for each cover (504, 506), a blocking arrangement (512) intended to assume a blocking position in which the displacement of the locking rod (510) is prevented, and an unblocking position in which the displacement of the locking rod (510) is permitted.

11. Covering arrangement (500) according to claim 11, **characterised in that** each blocking arrangement (512) comprises a gate member (602), which is mounted to be free to rotate, the said gate member (602) comprising a blocking arm (604) which extends on one side of the axis of rotation and an actuating arm (606) which extends on the other side of the axis of rotation, and **in that** each cover (504, 506) comprises a pin (608) which is intended to come to bear on the corresponding actuating arm (606) in the unblocking position.

## Patentansprüche

1. Kessel zur Wärmebehandlung (100), der zum Aufnehmen von mindestens zwei Stapeln von Nahrungsmittelprodukten bestimmt ist, welcher Kessel zur Wärmebehandlung (100) enthält:
- einen Kessel (102), der zum Befüllen mit Wasser zum Ausführen der Wärmebehandlung bestimmt ist und der eine auf der Oberseite des Kessels (102) angeordnete Einlassöffnung (106) und eine auf der Oberseite des Kessels (102) angeordnete Auslassöffnung (108) aufweist, die voneinander beabstandet sind,
- eine Verschiebeeinrichtung (104), die dazu bestimmt ist, einen Stapel (110) auf Höhe der Einlassöffnung (106) zu übernehmen und ihn zu einer der Auslassöffnung (108) gegenüberliegenden Stelle zu transportieren, und
- eine Abdeckvorrichtung (500), die ein zentrales Element (502) aufweist, das auf dem zwischen den beiden Öffnungen (106, 108) liegenden Teil des Kessels (102) angeordnet ist,
wobei der Kessel zur Wärmebehandlung **dadurch gekennzeichnet ist, dass** die Abdeckvorrichtung (500) des Weiteren enthält:
- einen Einlassdeckel (504), der dazu bestimmt ist, die Einlassöffnung (106) zu verschließen,
- einen Auslassdeckel (506), der dazu bestimmt ist, die Auslassöffnung (108) zu verschließen, und
- eine Arretiereinrichtung (508), die es ermöglicht, jeden der Deckel (504, 506) in geschlossener Position abwechselnd zu arretieren.

2. Kessel zur Wärmebehandlung (100) nach Anspruch 1, **dadurch gekennzeichnet, dass** die Verschiebung zwischen der Übernahme des Stapels (110) und dessen Positionierung gegenüber der Auslassöffnung (108) eine horizontale Versetzung (112) ist.

3. Kessel zur Wärmebehandlung (100) nach einem der Ansprüche 1 oder 2, **dadurch gekennzeichnet, dass** die Arretiereinrichtung (508) enthält:
- eine Arretierstange (510), die frei verschiebbar auf dem zentralen Element (502) parallel zur horizontalen Richtung (112) angebracht ist, wobei jedes Ende der Arretierstange (510) einen Riegel darstellt, der geeignet ist, mit einem der Deckel (504, 506) zusammenzuwirken, um ihn in seiner geschlossenen Position zu arretieren, und
- für jeden Deckel (504, 506) eine Verriegelungseinrichtung (512), die zum Einnehmen einer Verriegelungsposition, in der die Verschiebung der Arretierstange (510) verhindert wird, und einer Entriegelungsposition, in der die Verschiebung der Arretierstange (510) gestattet ist, bestimmt ist.

4. Kessel zur Wärmebehandlung (100) nach Anspruch 3, **dadurch gekennzeichnet, dass** die Arretiereinrichtung (512) ein Schnappschloss (602) enthält, das frei drehbar angebracht ist, wobei das Schnappschloss (602) einen Arretierhebel (604) aufweist, der sich von einer Seite der Drehachse aus erstreckt, und einen Aktivierungshebel (606), der sich von der anderen Seite der Drehachse aus erstreckt, und **dadurch**, dass jeder Deckel (504, 506) eine Kontaktfläche (608) aufweist, die dazu bestimmt ist, in der Entriegelungsposition auf dem entsprechenden Aktivierungshebel (606) zur Auflage zu kommen.

5. Kessel zur Wärmebehandlung (100) nach einem der Ansprüche 1 bis 4, **dadurch gekennzeichnet, dass** die Verschiebeeinrichtung (104) enthält:
- eine motorisierte Einheit (202), die zum Erzeugen einer Hin- und Herbewegung bestimmt ist, und
- eine Einheit von Laufwagen (304), die jeweils dazu bestimmt sind, nacheinander einen Stapel (110) aufzunehmen und die von der motorisierten Einheit (202) in Bewegung gesetzt werden und die Mitnahmemittel (212) enthalten, die sich verriegeln, um nacheinander jeden Stapel (110) von der Einlassöffnung (106) zur Auslassöffnung (108) mitzunehmen, und die sich entriegeln, um zu verhindern, dass sie jeden Stapel (110) von der Auslassöffnung (108) zur Einlassöffnung (106) mitnehmen.

6. Kessel zur Wärmebehandlung (100) nach Anspruch 5, **dadurch gekennzeichnet, dass** jedes Mitnahmemittel (212) die Form einer Mitnehmerklinke (212) annimmt, die sich in einer Drehrichtung frei drehen kann und in der Drehung in entgegengesetzter Richtung blockiert ist.

7. Kessel zur Wärmebehandlung (100) nach einem der Ansprüche 5 oder 6, **dadurch gekennzeichnet, dass** jeder Laufwagen (204) auf mit dem Kessel (102) fest verbundenen Führungsschienen (210) gleitend angebracht ist.

8. Kessel zur Wärmebehandlung (100) nach einem der Ansprüche 1 bis 7, **dadurch gekennzeichnet, dass** jeder Stapel (110) auf dem Boden des Kessels (102) mittels Rädern (306) aufliegt.

9. Abdeckvorrichtung (500) für einen Kessel zur Wärmebehandlung (100), der zum Aufnehmen von mindestens zwei Stapeln von Nahrungsmittelprodukten bestimmt ist, wobei der Kessel zur Wärmebehandlung (100) enthält:
- einen Kessel (102), der zum Befüllen mit Wasser zum Ausführen der Wärmebehandlung bestimmt ist und der eine eine Einlassöffnung (106) und eine Auslassöffnung (108) aufweist, die verschieden und voneinander beabstandet sind und auf der Oberseite des Kessels (102) angeordnet sind, und
- eine Verschiebeeinrichtung (104), die dazu bestimmt ist, einen Stapel (110) auf Höhe der Einlassöffnung (106) zu übernehmen und ihn zu einer der Auslassöffnung (108) gegenüberliegenden Stelle zu transportieren, und
wobei die Abdeckvorrichtung (500) ein zentrales Element (502) umfasst, das auf dem Teil des Kessels (102) angeordnet ist, der zwischen den beiden Öffnungen (106, 108) liegt, und **dadurch gekennzeichnet ist, dass** sie des Weiteren enthält:
- einen Einlassdeckel (504), der dazu bestimmt ist, die Einlassöffnung (106) zu verschließen,
- einen Auslassdeckel (506), der dazu bestimmt ist, die Auslassöffnung (108) zu verschließen, und
- eine Arretiereinrichtung (508), die es ermöglicht, jeden der Deckel (504, 506) in geschlossener Position abwechselnd zu arretieren.

10. Abdeckvorrichtung (500) nach Anspruch 9, **dadurch gekennzeichnet, dass** die Arretiereinrichtung (508) enthält:
- eine Arretierstange (510), die frei verschiebbar auf dem zentralen Element (502) parallel zur horizontalen Richtung (112) angebracht ist, wobei jedes Ende der Arretierstange (510) einen Riegel darstellt, der geeignet ist, mit einem der Deckel (504, 506) zusammenzuwirken, um ihn in seiner geschlossenen Position zu arretieren, und
- für jeden Deckel (504, 506) eine Verriegelungseinrichtung (512), die zum Einnehmen einer Verriegelungsposition, in der die Verschiebung der Arretierstange (510) verhindert wird, und einer Entriegelungsposition, in der die Verschiebung der Arretierstange (510) gestattet ist, bestimmt ist.

11. Abdeckvorrichtung (500) nach Anspruch 10, **dadurch gekennzeichnet, dass** jede Verrieglungseinrichtung (512) ein Schnappschloss (602) aufweist, das frei drehbar angebracht ist, wobei das Schnappschloss (602) einen Arretierhebel (604) enthält, der sich von einer Seite der Drehachse aus erstreckt, und einen Aktivierungshebel (606), der sich von der anderen Seite der Drehachse aus erstreckt, und **dadurch**, dass jeder Deckel (504, 506) eine Kontaktfläche (608) aufweist, die dazu bestimmt ist, in der Entriegelungsposition auf dem entsprechenden Aktivierungshebel (606) zur Auflage zu kommen.
